# EUROPEAN PATENT APPLICATION

(11) **EP 3 693 690 A1**
(43) Date of publication of application: **12.08.2020**
(21) Application number: 19156287.5
(22) Date of filing: 08.02.2019
(51) Int. Cl.: F27D 21/00, C21B 7/10, G01N 29/265, F27D 9/00

(54) **COOLING PLATE THICKNESS MEASUREMENT IN A METALLURGICAL FURNACE**

(71) Applicant: Paul Wurth S.A., 1122 Luxembourg (LU)
(72) Inventor: Olivieri, Stefano, 16154 Genova (IT); Cravino, Fabio, 16011 Arenzano (IT); Lodi, Giorgio Federico, 16149 Genova (IT)
(74) Representative: Office Freylinger

(57) **Abstract**

A device (10) and method for measuring the thickness of a cooling plate (12) are disclosed. The device is designed to fit inside a coolant channel (16) of the cooling plate and comprises a probe holder housing (26) having a front sensor side (30) and an opposite back side (32), in which an ultrasonic probe (28) is arranged. A flexible cord (60) is linked to the probe housing to assist the progression of the probe holder through the length of the coolant channel. The probe holder includes an expandable structure (41) configured to expand from a compact configuration to an expanded configuration, designed to bear against the inner surface (42) of said coolant channel (16) and bias the sensor side (30) of the sensor housing against the inner surface (42) of the coolant channel.

## Description

### FIELD OF THE INVENTION

The present invention generally relates to cooling plates for metallurgical furnaces, namely blast furnaces, and in particular to a device and method of measuring the thickness of the cooling plates.

### BACKGROUND OF THE INVENTION

Cooling plates for metallurgical furnaces, also called "staves", are well known in the art. They are used to cover the inner wall of the outer shell of the metallurgical furnace, as e.g. a blast furnace or electric arc furnace, to provide:
(1) a heat evacuating protection screen between the interior of the furnace and the outer furnace shell; and
(2) an anchoring means for a refractory brick lining, a refractory guniting or a process generated accretion layer inside the furnace.

Originally, the cooling plates were cast iron plates with cooling pipes cast therein. As an alternative to cast iron staves, copper staves have been developed. Nowadays, most cooling plates for a metallurgical furnace are made of copper, a copper alloy or, more recently, of steel.

The refractory brick lining, the refractory guniting material or the process generated accretion layer forms a protective layer arranged in front of the hot face of the panel-like body. This protecting layer is useful to protect the cooling plate from deterioration caused by the harsh environment reigning inside the furnace. In practice, the furnace is however also occasionally operated without this protective layer, resulting in erosion of the lamellar ribs of the hot face.

While the blast furnace is initially provided with a refractory brick lining on the front side of the staves, this lining may wear out during the campaign depending on the operating conditions. In particular, it has been observed that, in the bosh section, the refractory lining may disappear relatively rapidly. While an accretion layer of slag and burdening then typically forms on the hot side of the cooling plates, it actually continuously builds-up and wears out, so that during certain periods of time the cooling plates are directly exposed to the harsh conditions inside the blast furnace, conducting to the wear of the cooling plate body.

The principal causes of wear to the accretion layer, and of course to the lining and cooling plate, are the upward flow of hot gases and the rubbing of the sinking burden (coal, ore, etc.). Regarding the flow of hot gases, the wear is not only due to a thermal load, but also to abrasion by particles carried in the ascending gases.

Document JP-A2-61264110 discloses a cooling stave comprising a wear detection system using an ultrasonic probe in contact with the rear face of the stave body in order to detect erosion thereof. This system allows measuring the residual body thickness between the front and rear faces.

Document KR20110076422 discloses a thickness measurement system, wherein an ultrasonic probe is mounted at the end of a flexible extension member, which permits inserting the ultrasonic probe in the inlet and outlet regions of the coolant channel. It is thus possible to actually measure the thickness of the body between the cooling plate front side and the coolant channel. This information is of interest since it gives the residual body thickness to the coolant channel, which is critical for safe operation of the blast furnace, as introduction of water into the blast furnace must be avoided. However, this system only permits a local measurement (at the beginning and/or at the end of the coolant channel) and is today considered insufficient for a proper assessment of the condition of the cooling plate. Indeed, experience shows that often, the cooling plate is more worn in the middle body than at the extremities. Assessments based on this system thus leads to an incorrect analysis in reference to the actual general wear of the cooling plate, and therefore to an incorrect forecast of its residual life time.

### OBJECT OF THE INVENTION

The object of the present invention is to provide an alternative and reliable way of monitoring the wear status of cooling plates.

This object is achieved by a device and method of measuring the thickness of a cooling plate as claimed in claims 1 and 11.

### SUMMARY OF THE INVENTION

The present invention proposes a device for measuring a thickness of a cooling plate, which is designed to fit inside a coolant channel of the cooling plate. The device comprises:
a probe holder comprising a housing having a front sensor side and an opposite rear back side, an ultrasonic probe being arranged in the probe holder housing to be able to transmit and receive ultrasonic waves from the front sensor side;
an expandable structure configured to deploy at the back side of the probe housing; and
a flexible cord linked to the probe housing to assist the progression of the probe holder through the length of the coolant channel.

The expandable structure is configured to expand from a compact configuration to an expanded configuration, which is designed to bear against the inner surface of the coolant channel and bias the sensor side of the sensor housing against the inner surface of the coolant channel.

The present invention thus proposes a device for thickness measurement that is designed to be inserted inside the coolant channel of the cooling plate and is adapted to be guided through the length of the coolant channel in order to measure the body thickness at a plurality of locations along the channel, i.e. not only in the inlet and outlet regions. This is made possible inter alia by the use of an expandable structure associated with the probe housing, which is in compact (i.e. low-height) configuration during insertion into the coolant channel, and which is then expanded to occupy the full diameter of the coolant channel for the thickness measurement. Since the probe is inside the coolant channel, it will measure the body thickness remaining from the channel to the front side of the body.

The progression of the probe holder inside the coolant channel is controlled by means of the flexible cord. The flexible cord is advantageously designed to be longitudinally flexible and torsion resistant, for an improved control of the orientation of the probe holder in the channel. Indeed, the operator should ensure that the sensor side of the probe holder is turned towards the front side of the cooling panel, so that the ultrasound waves are emitted in the direction of interest.

In embodiments, the flexible cord may be a multi-row chain connected to the probe housing to extend longitudinally in the coolant channel, hence showing longitudinal flexibility and torsional stiffness. Other types of flexible cords may be employed, also showing a longitudinal flexibility and being torsion resistant, for example a strong strap.

In embodiments, the expandable structure comprises a front and a rear lever articulated on the housing at opposite ends. Spring means are preferably arranged to bias said levers towards one another, e.g. a tension spring attached to both levers. This design entails flexibility to the device that allows passing through bends of the cooling plate channels, and permits that the levers tend to spontaneously come towards each other, to maximise the extent of the device along the diameter of the coolant channel. This ensures that the sensor side comes into contact with the surface of the coolant channel.

Conveniently, a wheel is pivotally mounted at the free end of the first lever, and the second lever includes at its free end a pivotally mounted connecting element to which the cord is connected.

In embodiments, a locking cable assembly is provided to lock the expandable structure in expanded configuration. The locking cable assembly includes a steel wire fitted into an outer housing; the outer housing is in abutment against a fitting element provided on one lever; and the wire extends to the second lever and is blocked by another fitting element. This locking cable assembly allows applying a closing force on the levers or simply defining a maximum opening between both levers, to maintain them in a desired configuration.

The ultrasonic probe may be built based on any appropriate technology. It typically includes one ultrasonic sensor or transducer, but could comprise more. In embodiments, a fluid coupling medium, e.g. water, is used between the sensor and the coolant channel surface. Therefore, the housing may include an inlet port for supply of pressurised water through a water hose, and a spray orifice is provided on the sensor side.

According to another aspect, the present invention proposes a method of measuring a thickness of a cooling plate comprising a body having a front face, an opposite rear face and one or more coolant channels therein, comprising:
introducing into said coolant channel a device for thickness measurement according to the first aspect;
moving said probe holder through the length of said coolant channel and handling said probe holder such that said ultrasonic probe is generally turned towards said front face, while measuring the body thickness between the front side and the coolant channel;
wherein during said measurements said expandable structure is deployed to bear against the inner surface of the coolant channel and bias the sensor side of the housing against the surface of the coolant channel;
and wherein progression through the channel is assisted by means of said flexible cord attached to said probe housing.

These and other embodiments of the present device and method are described in the appended dependent claims.

### BRIEF DESCRIPTION OF THE DRAWINGS

The present invention will now be described, by way of examples, with reference to the accompanying drawings, in which:
- FIG. 1:: is a perspective view of an embodiment of the device for thickness measurement according to the present invention;
- FIG. 2:: is a vertical section view through a cooling plate in which the device of Fig.1 is introduced;
- FIG. 3:: is a view of the device of Fig.1 inside a coolant channel of the cooling plate; and
- FIG. 4:: is a top view of the device of Fig.1.

### DETAILED DESCRIPTION OF A PREFERRED EMBODIMENT

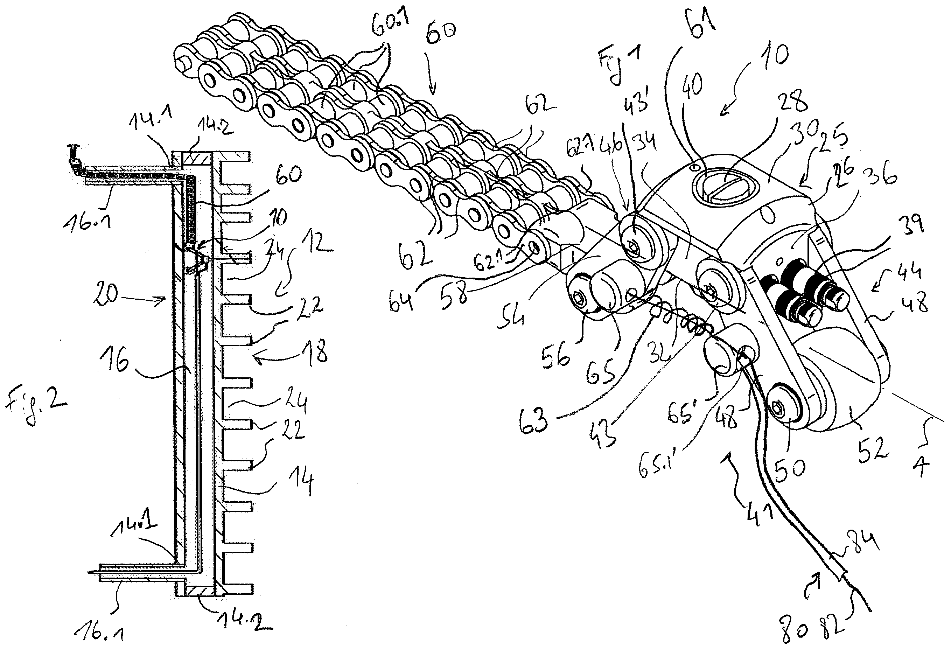

The present invention relates to a device and method for measuring the thickness of cooling plates. The device 10 is designed to be inserted into coolant channels of cooling plates 12, to measure the body thickness remaining to the front side of cooling panel, as depicted in Fig.2.

As it is known, cooling plates are used in the iron making industry for cooling the wall of furnaces such as e.g. shaft furnaces, blast furnaces or electric arc furnaces. A cooling plate comprises a body 14 that is typically formed from a slab e.g. a cast or forged body of copper, copper alloy or steel. Furthermore, the body has at least one conventional coolant channel embedded therein. The coolant channels may be formed by cast-in pipes or by drilling through the body.

Fig. 2 shows a conventional cooling plate 12 comprising a slab-shaped cast body 14 of copper alloy comprising a plurality of coolant channels 16 (only one is seen in the Figure). The coolant channels 16 have been obtained by drilling through the shaped body from one longitudinal end to the other; then drilling top and bottom access holes 14.1 at the extremities of the coolant channel 16. The axial extremities of the coolant channel 16 are closed by plugs 14.2, whereas connection pipes 16.1 are welded to the access holes 14.1. In the blast furnace, such cooling plates 12 provide a heat evacuating protection screen between the interior of the furnace and the outer furnace shell (or armour).

In the blast furnace, the cooling plate 12 is mounted onto the furnace shell. The body 14 has a front face generally indicated 18, also referred to as hot face, which is turned towards the furnace interior, and an opposite rear face 20, also referred to as cold face, which in use faces the inner surface of the furnace shell.

As is known in the art, the front face 18 of body 12 advantageously has a structured surface, in particular with alternating ribs 22 and grooves 24. When the cooling plate 10 is mounted in the furnace, the grooves 24 and lamellar ribs 22 are generally arranged horizontally in order to provide an anchoring means for a refractory brick lining (not shown).

As it is known, depending on the operating conditions of the blast furnace, the refractory brick lining may be subject to erosion due to the descending burden material, leading to the fact that the cooling plates are unprotected and have to face the harsh environment inside the blast furnace. As a result, abrasion of the cooling plates occurs too, and it is desirable to know the wear status of the cooling plates.

An embodiment of the present device 10 for thickness measurement of cooling plates is shown in perspective in Fig.1. It comprises a probe holder 25 including a housing 26 that carries an ultrasonic probe 28 or transducer. The probe holder 26 is of globally square or rectangular shape and has an upper, sensor side 30, an opposite back side 32 as well as two lateral sides 34 and two transverse sides 36, 38. Transverse side 36 is also referred to as front side. In this embodiment, a pair of connectors 39 is provided for connection cables carrying the transmitting signal and the received signal. These cables are connected at the other end to a control unit (not shown) that is configured to operate reflection-type ultrasonic thickness measurement.

The ultrasonic probe 28 is arranged in the probe holder 26 to be able to transmit and receive ultrasonic waves from the sensor side 30. Reference sign 40 designates an opening for the ultrasonic probe 28 provided in the sensor side 30. The ultrasonic probe 28 is flush with the sensor side 30.

Reference sign A in Fig.1 designates a longitudinal axis, which is the direction in which the device 10 is used in practice.

The probe holder 26 further includes an expandable structure, generally indicated 41, configured to be deployable at the back side of the housing 26, in such a way that the device 10 can be brought in an operating configuration where the sensor side 30 is near to or bears against the coolant channel surface 42, whereas the expandable structure also bears against a portion of the coolant channel surface 42 situated below the back side 32 of the holder 26.

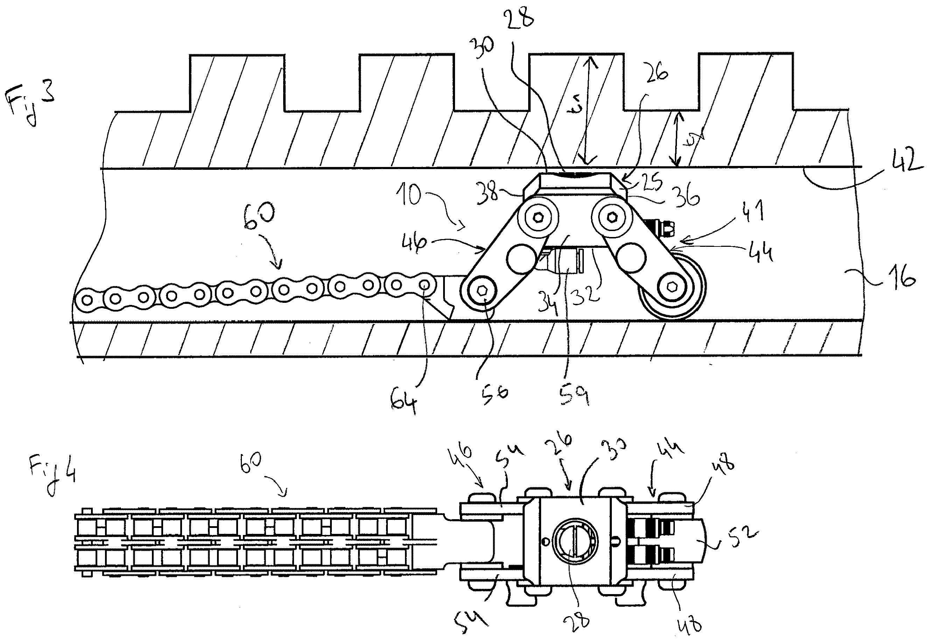

In this operating configuration, best seen in Fig.3, the expandable structure 40 is thus deployed such that device 10 expands over the whole inner diameter of the coolant channel 16, this deployment ensuring intimate contact between the inner surface 42 of the coolant channel 16 and the probe holder sensor side 30.

It may be noted here that the device 10 is particularly designed for operation in cooling plates with drilled-in cooling channels, generally of copper/alloy, where the sensor surface 30 is in direct contact with the surface 42 of the body 14, i.e. there is no intermediate piping or layer.

The expandable structure 40 here comprises a front lever 44 and a rear lever 46 that are articulated on the housing 26.

The front lever 44 comprises a pair of parallel arms 48 pivotally fixed at one end to opposite lateral sides of the housing 26 and linked at the opposite ends by a bolt 50 that forms an axis for a wheel 52.

The rear lever 46 likewise comprises a pair of parallel arms 54 pivotally fixed at one end to opposite lateral sides of the housing 26 and linked at the opposite ends by a bolt 56 that forms a pivoting axis for a sliding connector element 58. Attached to the connector element 58 is a chain 60 that permits stably controlling the progression of the device 10 in the coolant channel 16.

The chain 60 is here a duplex-type roller chain having two rows of side links 62. The three end links 62.1 next to the lever 46 are connected to the connector element 58 by means of a shaft 64.

Such chain is advantageous since it is articulated in its longitudinal direction (i.e. along axis A) but is rather stiff in the transversal direction, i.e. it is torsion resistant.

The chain 60 forms a flexible cord that allows introducing the device 10 into the cooling channel 16 of the cooling plate 12. The device is inserted through the upper connection pipe 16.1 and then vertically into the straight section of the coolant channel 16, parallel to the hot face 18. The flexibility of the chain 60 together with the articulated structure of the probe holder makes it easy to take the 90° bend after the inner end of pipe 16.1. The articulation of the levers 44, 46 on the probe holder 26 also facilitates passing through the bend at the junction from the inlet pipe 16.1 to the straight coolant channel 16.

It may be noted that the levers 44, 46 are articulated so that they pivot in a same plane parallel to axis A and substantially perpendicular to the front side 30. The pivoting axes of the levers 44, 46 at the housing 26 are provided by a pair of bolts 43, 43' that extend from one transverse side 34 to the other and are thus perpendicular to direction A. The connection axis 64 of the chain to the connector element 58 is parallel to the direction of bolts 43 and 43'. Similarly, the articulations of the chain, i.e. its pins and bushings 60.1, are also parallel to connection axis 64 and bolts 43 and 43'.

Advantageously, an extension spring 63, or similar, is connected to each lever 44, 46 to bias them in closing direction. The spring 63 is attached to the fitting elements 65, 65', which are arranged centrally on one arm of each lever. The spring creates a load that brings the two levers together. The opening angle of the V-shaped profile of the device is thus reduced, increasing the height of the device. Thanks to spring 63, the device spontaneously expands inside the coolant channel 16 to occupy to available space, whereby the sensor side 30 and the wheel 52 together with slider 54 bear on opposite portions of the inner surface of coolant channel 16.

To possibly assist the closing of the levers 44 and 46, and maintain the device 10 in this operating configuration, a brake-type lock cable assembly 80 is used, i.e. a steel wire 82 in an outer housing 84. Fitting element 65' comprises a stepped bore 65.1' to block one end of the outer housing 84 and allow the steel wire 82 to pass through and join the other fitting element 65. Pulling on the wire 82 at the opposite end of the cable assembly 80 will bring the levers toward each other, since the wire is blocked at 65 and the housing at 65'.

It may be noted that in order to introduce the device 10 into the cooling plate 12, the latter is disconnected from the furnace coolant circuit and emptied from coolant water.

Once the probe holder 26 is inside the coolant channel 16, it is progressively lowered to perform thickness measurements at a plurality of positions along the length of the coolant channel 16. The present device 10 allows measuring the body thickness not only at the inlet and outlet regions of the body, but also at a plurality of positions along the length of the body, including in the central regions.

In practice, the device 10 is moved to a plurality of positions, and a thickness measurement is performed for each position. Alternatively, the measurement could be done continuously. During the thickness measurement, the sensor side 30 is maintained substantially perpendicular to the front side 18. The angular orientation of the device 10 in the coolant channel 16 is known thanks to the configuration of the chain 60, which has a flattened cross section. Water is preferably used as coupling medium. Reference sign 59 designates an inlet port to which a water hose (not shown) is connected. Pressurised water is supplied through the hose, enters into the housing and is sprayed against the surface 42 of the coolant channel 16 by a dedicated drilled hole 61 surrounding the ultrasonic probe 28.

As it will be understood, since the device 10 is inserted inside the coolant channel 16, it measures a body thickness that corresponds to the distance from the inner side of the coolant channel 16 (facing the front side) to the foremost body portion on the front face, at the level of the probe holder 26 (i.e. perpendicular to the front side).

That is, when the probe is at the level of a rib 22, the body thickness corresponds to the distance between the inner surface of the channel to the tip of the rib 22, indicated t1 in Fig.3.

When the probe is at the level of a groove 24, the body thickness corresponds to the distance between the inner surface of the channel to the tip of the rib 22, indicated t2.

As it is known in the art, in reflection (or pulse-echo) mode, the sensor / transducer performs both the sending and the receiving of the pulsed sound waves as they are reflected back to the transducer from the interface formed by the front side of the cooling plate 12. The transducer may be of any appropriate technology, e.g. piezo electric; when excited, it may typically emit very short ultrasonic pulse waves with center frequencies ranging from 1 to 15 MHz. The control unit is configured to perform thickness measurement based on the time taken by the ultrasound wave to return to the coolant channel surface 42. For example, the control unit may be configured to display results in the form of a signal with an amplitude representing the intensity of the reflection and the distance, representing the arrival time of the reflection. The exploitation of the ultrasonic waves is not the focus of the present invention and those skilled in the art may devise other ways of exploiting the transducer signals.

Finally, one may observe in Fig.2 that whereas the device 10 is preferably inserted through the upper connection pipe 16.1 in the coolant channel 16, the various other cables can be passed through the lower connection pipe 16.2, specifically: the sensor cables, the water hose, and the lock cable assembly.

## Claims

1. A device (10) for measuring the thickness of a cooling plate (12), said device being designed to fit inside a coolant channel (16) of the cooling plate and comprising:
a probe holder (25) comprising a housing (26) having a front sensor side (30) and an opposite back side (32), an ultrasonic probe (28) being arranged in said probe holder housing to be able to transmit and receive ultrasonic waves from said front sensor side;
an expandable structure (41) configured to deploy at the back side (32) of said housing;
a flexible cord (60) linked to said probe housing to assist the progression of said probe holder through the length of the coolant channel (16);
wherein said expandable structure is configured to expand from a compact configuration to an expanded configuration, designed to bear against the inner surface (42) of said coolant channel (16) and bias the sensor side (30) of the sensor housing against the inner surface (42) of the coolant channel.

2. The device according to claim 1, wherein said flexible cord (60) is designed to be longitudinally flexible and torsion resistant, to control the orientation of the probe holder in said channel.

3. The device according to claim 1 or 2, wherein said flexible cord (60) has a substantially flattened cross-sectional profile and is connected to said probe holder (26).

4. The device according to claim 2 or 3, wherein said flexible cord (60) is a multi-row chain connected to said probe housing (26) to extend longitudinally in said coolant channel, hence showing longitudinal flexibility and torsional stiffness.

5. The device according to any one of the preceding claims, wherein said expandable structure comprises a front and a rear lever (44, 46) articulated on the housing at opposite ends, wherein spring means (63) are preferably arranged to bias said levers towards one another.

6. The device according to claim 5, wherein the pivoting axes (43, 43') of said levers (44, 46) are sensibly parallel to said sensor side (30).

7. The device according to claim 5 or 6, wherein a wheel (52) is pivotally mounted at the free end of said first lever (44) and said second lever (46) includes at its free end a pivotally mounted connecting element (54) to which said cord is connected.

8. The device according to claim 5, 6 or 7, comprising a locking cable assembly (80) including a steel wire (82) fitted into an outer housing (84), wherein said outer housing is in abutment against a fitting element (65') provided on one lever (44), and the wire (82) extends to the second lever (46) and is blocked by another fitting element (65).

9. The device according to claim 6 when depending on claim 2, 3 or 4, wherein said cord (60) is able to bend in a transverse direction perpendicular to its longitudinal extension, and said transverse direction is substantially parallel to the pivoting axes of said levers.

10. The device according to any one of the preceding claims, wherein said housing comprises an inlet port for a fluid coupling medium (59) and a spray orifice (61) in said sensor side.

11. A method of measuring a thickness of a cooling plate comprising a body having a front face (18), an opposite rear face (20) and one or more coolant channels (16) therein, comprising:
introducing into said coolant channel a device (10) as claimed in any one of the preceding claims;
moving said probe holder (25) through the length of said coolant channel and handling said probe holder such that said ultrasonic probe (28) is generally turned towards said front face (18), while measuring the body thickness between the front side and the coolant channel;
wherein during said measurements said expandable structure is deployed to bear against the inner surface (42) of the coolant channel and bias the sensor side of the housing against the surface of the coolant channel;
and wherein progression through the channel is assisted by means of
said flexible cord attached to said probe housing.

12. The method according to claim 11, wherein a fluid coupling medium is supplied during thickness measurement, in-between said ultrasonic probe and the cooling channel inner surface.

13. The method according to claim 12, wherein said fluid coupling medium, is water sprayed from an orifice (61) in said sensor housing.

14. The method according to any one of claims 11 to 13, wherein said cooling plate body is obtained by casting and said coolant channel is drilled in said body.
